# EUROPEAN PATENT APPLICATION

(11) **EP 1 927 798 A1**
(43) Date of publication of application: **04.06.2008**
(21) Application number: 07022634.5
(22) Date of filing: 22.11.2007
(51) Int. Cl.: F16J 15/06, F16J 15/10

(54) **Bonded filter gasket with raised sealing beads**

(30) Priority: 30.11.2006 US 565069
(71) Applicant: Carl Freudenberg KG, 69469 Weinheim (DE)
(72) Inventor: Blakeley, Richard D, Ortonville, MI 48462 (US); Shepherd, Rocky A, Mauston, Wisconsin 53948 (US); Ganther, Janet Irene, Tomath, Wisconsin 54660 (US)

(57) **Abstract**

A sealing gasket and a method are provided. One aspect of the sealing gasket includes a base. The base is densified to form a substantially flat portion and a raised seal portion. The raised seal portion is configured to conform to a contour of a surface of a component and seals a region between the surface and the base to prevent fluid leakage. Another aspect of the sealing gasket includes a filter portion. The filter portion is coupled to the base and configured to extend across a fluid passageway of the base.

## Description

### FIELD

The present disclosure relates to a sealing gasket. More specifically, the present disclosure relates to a bonded filter gasket having a raised sealing bead.

### BACKGROUND

The statements in this section merely provide background information related to the present disclosure and may not constitute prior art.

It is already known in the automotive industry to provide sealing gaskets for sealing joints between two components in a fluid line. The sealing gaskets may be made of rubber or plastics compatible with the fluid to be transmitted in the fluid line, for example water, oil, petrol, and/or solvents.

For many applications, it is desirable to remove any solid particles present in the fluid to prevent damage to equipment connected to the fluid line. For this purpose, it is common to fit a filter in the fluid line, for example a metal or plastic mesh screen having a mesh rating to remove solid particles above a given size.

Additionally, a problem with a typical sealing gasket is that the gasket does not always effectively seal between the filter and a surface of a component and fluid may leak between the gasket and the component, bypassing the filter. Unfiltered fluid may reach the component or other unexpected components and possibly interfere with operation of the component or the unexpected components. The leakage may also cause a surface of the component to warp or become irregular.

The present disclosure provides a sealing gasket and a method of making a sealing gasket to reduce leakage by using a gasket having a sealing bead, such that the sealing bead has a sufficient strength and physical integrity to make a strong bond to a component surface. Additionally, the sealing gasket includes a filter to reduce material and installation costs along with preventing the risk of assembling components without the filter.

### SUMMARY

According to the present disclosure, a sealing gasket and a method are provided. One aspect of the sealing gasket includes a base. The base is densified to form a substantially flat portion and a raised seal bead portion. The raised seal portion is configured to conform to a contour of a surface of the component and seals a region between the surface and the base to prevent fluid leakage. Another aspect of the sealing gasket includes a filter portion. The filter portion is coupled to the base and configured to extend across a fluid passageway of a component.

One aspect of the method provides manufacturing a base. Another aspect of the method includes providing a filter. Another aspect of the method provides bonding the filter to the base to allow the filter to extend across a fluid passageway of a component. A further aspect of the method includes compressing the base to form a raised seal bead and a substantially flat surface. Additionally, the raised seal bead conforms to a contour of a surface of a component and seals a region between the surface and the base to prevent fluid leakage.

Further areas of applicability will become apparent from the description provided herein, It should be understood that the description and specific examples are intended for purposes of illustration only and are not intended to limit the scope of the present disclosure.

### DRAWINGS

The drawings described herein are for illustration purposes only and are not intended to limit the scope of the present disclosure in any way.
Figure 1 is a top view of an exemplary sealing gasket according to the present disclosure;
Figure 2 is a cross-sectional view of the sealing gasket of Figure 1 prior to a base of the sealing gasket being densified along a line 2-2 according to the present disclosure;
Figure 3 is a cross-section view of the sealing gasket of Figure 1 after the base is densified along the line 2-2 according to the present disclosure; and
Figure 4 is a flow chart of an operation of manufacturing the sealing gasket according to the present disclosure.

### DETAILED DESCRIPTION

The following description is merely exemplary in nature and is not intended to limit the present disclosure, application, or uses. It should be understood that throughout the drawings, corresponding reference numerals indicate like or corresponding parts and features.

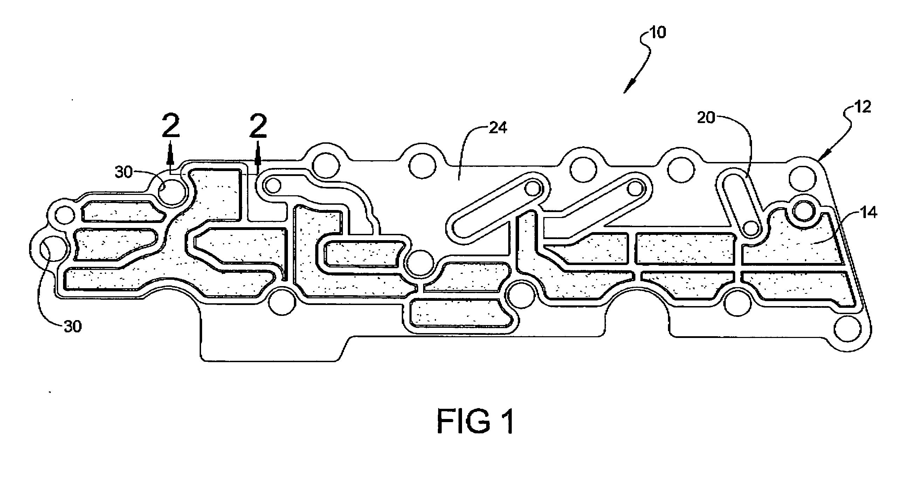

Referring to Figure 1, there is shown an embodiment of an exemplary sealing gasket 10. In this embodiment, the sealing gasket 10 is a valve body filter gasket for a transmission application, but this is not essential and other types of gaskets suitable for other intended applications may be employed such as fuel system applications, pump applications, other transmissions applications, cooling system applications, and industrial housing applications. Additionally, the sealing gasket 10 may comprise a plurality of different sizes and shapes.

Still referring to Figure 1, the sealing gasket 10 comprises a base portion 12 and a filter portion 14. The base portion 12 is made of any material suitable for the intended application. For example, the material may comprise a fiber material or a polymeric material. The fiber material may comprise a cellulose material. Additionally, the base portion 12 is bonded directly to the filter portion 14.

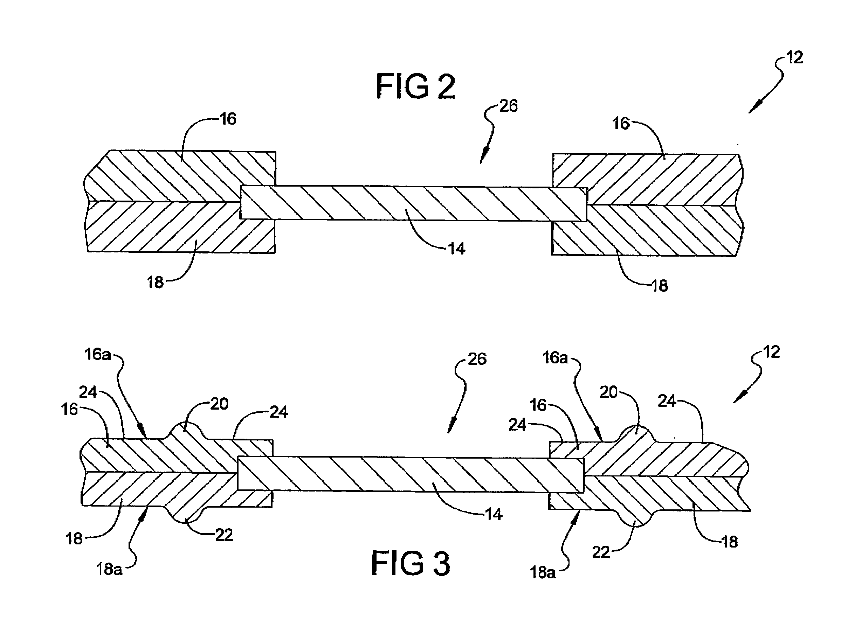

As shown in Figure 2, the base portion 12 includes a first layer of material 16 and a second layer of material 18 with the filter portion 14 adjacent and between the first layer of material 16 and the second layer of material 18. The first layer of material 16 and the second layer of material 18 may be comprised of the same material. However, the first layer of material 16 may be different from the second layer of material 18. Such a situation is intended to be within the scope of this disclosure. Additionally, located between the first layer of material 16 and the second layer of material 18 is an adhesive layer (not shown) used to bond the first layer of material 16 to the second layer of material 18. The first layer 16 and the second layer of material 18 comprise a combined height.

Referring to Figure 3, the first layer of material 16 and the second layer of material 18 are densified producing a raised, non-compressed sealing bead or portion 20 and a substantially flat compressed or densified surface or portion 24 adjacent to the raised sealing bead 20. The raised sealing bead 20 is positioned on a first or top surface 16a of the base portion 12, more specifically the first layer of material 16, The raised sealing bead 20 comprises a conformable material having sufficient strength and physical integrity to make a strong bond with a surface of a component. In other words, the raised sealing bead 20 seals a region between the surface of the component and the base portion 12 in order to prevent fluid leakage from spreading to unwanted areas or components. Optionally, a second raised sealing bead or portion 22 may be formed on a second or bottom surface 18a of the base portion 12, more specifically the second layer of material 18.

The filter portion 14 comprises a mesh screen. The mesh screen is made of any suitable material and has a mesh size for an intended application for straining a particular type of fluid. The mesh screen may comprise a fiber material, a metal material, a polymeric material, or any combination thereof. For this example, the material comprises a polymeric material such as polyester having a mesh size of 185 micron with 41 % open area. The mesh screen is bonded between the first layer of material 16 and the second layer of material 18, such that the first layer of material 16 and the second layer of material 18 are embedded around a peripheral edge of the mesh screen. In other words, the first layer of material 16 and the second layer of material 18 overlap the peripheral edge of the mesh screen. In this embodiment, the filter portion 14 is formed by blanking out the mesh screen from a flat sheet of woven mesh.

The adhesive and the material of the first layer 16 and the second layer 18 are heated and compressed into and through the interstices of the peripheral edge of the filter portion 14 so as to bond the filter portion 14. This forms a unitary construction in which the base portion 12 and the filter portion 14 are integral.

As will be appreciated, the sealing gasket 10 is reinforced and supported around the peripheral edge of the filter portion 14, which is embedded in the base portion 12. In this way, the capability of the sealing gasket 10 is enhanced.

Optionally, the sealing gasket 10 comprises a plurality of bolt holes or apertures 30. Each bolt hole 30 allows a fastening device, such a bolt (not shown), to be inserted into the bolt hole 30 to couple the sealing gasket 10 to the component.

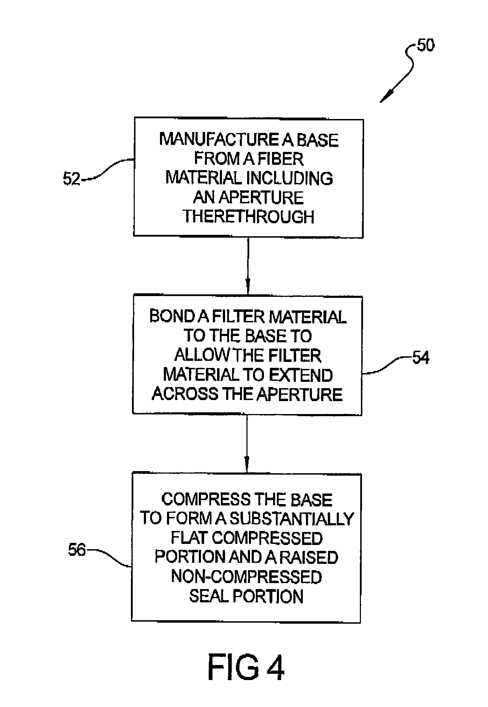

As shown in Figure 4, an operation 50 of manufacturing the sealing gasket 10 is provided. The operation of manufacturing the sealing gasket 10 includes manufacturing each layer 16, 18 of the base portion 12 having at least one aperture 26 at operation 52. The filter portion 14 is aligned adjacent to the aperture 26 of the first layer of material 16, such that the peripheral edge of the filter portion 14 extends over the aperture 26. The second layer 18 is then placed adjacent to the filter portion 14 and the first layer of material 16, such that the aperture 26 of the second layer of material 18 is adjacent and aligns with the aperture 26 of the first layer of material 16.

Using a mold, the sealing gasket 10 is bonded at operation 54. At operation 56, the base portion 12 is compressed to form the substantially flat densified portion 24 and the raised sealing bead 20. A predetermined pressure and heat are applied as necessary to compress the base portion 12 to a desired shape. The amount of heat and pressure are dependent upon the materials used, The densified portion 24 is reduced to a compressed height. On the other hand, the raised sealing bead 20 is approximately a height of the combined height of the uncompressed first and second layers 16, 18. The raised sealing bead 20 includes a predetermined shape configured by the mold. The raised sealing bead 20 is soft and malleable, such that it is capable of conforming to the surface of the component to prevent fluid leaks. On the other hand, the densified portion 24, such as the first layer of material 16 and the second layer of material 18 being combined with the adhesive and densified, is rigid and stiff. Additionally, the densified portion 24 is compressed against and meshed within the peripheral edge of the filter portion 14.

The sealing gasket 10 as provided above prevents fluid leakages, such as when fluid flows from one component to another component, from traveling into unwanted or unintended areas to prevent damage. Additionally, the sealing gasket 10 reduces material and installation costs by providing the base portion 12 with the filter portion 14.

## Claims

1. Sealing gasket for sealing between a first component and a second component comprising: a base formed of a fiber material densified to form a substantially flat compressed portion and a raised non-compressed seal portion, where the raised seal portion is configured to conform to a contour of a surface of at least one of the first and second components and is adapted to seal a region between the first and second components to prevent fluid leakage; and a filter portion coupled to the base and configured to extend across a fluid passageway of the base.

2. Sealing gasket according to claim 1, wherein the filter portion is bonded within the base.

3. Sealing gasket according to claim 1 or 2, wherein the fiber material comprises a cellulose fiber material.

4. Sealing gasket according to one of the claim 1 to 3, wherein the base includes first and second layers of fiber material each disposed on opposite sides of the filter portion.

5. Sealing gasket according to claim 4, wherein the first and second layers are bonded together by an adhesive.

6. Sealing gasket according to claim 4 or 5, wherein the first layer and the second layer of fiber materials are densified to form the substantially flat compressed portion and the uncompressed raised sealing portion on the base.

7. Sealing gasket accoding one of the claims 1 to 6, wherein the filter portion comprises a polyester mesh.

8. Sealing gasket according to one of the claims 1 to 7, wherein the substantially flat compressed portion comprises a dense portion and the uncompressed portion comprises a less dense portion.

9. Method of forming a sealing gasket manufacturing a base from a fiber material including an aperture therethrough; bonding a filter material to the base to allow the filter material to extend across the aperture; and compressing the base to form a substantially flat densified portion and a raised non-compressed seal portion.

10. Method according to claim 9, wherein compressing further comprises forming the flat densified portion such that the raised non-compressed portion is position about to a peripheral edge of the aperture of the base.

11. Method according to claim 9 or 10, wherein the filter material comprises a polyester mesh.

12. Method according to one of the claims 9 to 11, wherein the fiber material comprises a cellulose material.

13. Method according to one of the claims 9 to 12, wherein bonding further comprises bonding the filter material within the base.

14. Method according to one of the claims 9 to 13, wherein the base comprises a first layer of fiber material and a second layer of fiber material.

15. Method according to one of the claims 9 to 14, wherein bonding further comprises disposing the first layer and the second layer on opposite sides of the filter material.
